# FASCICULE DE BREVET EUROPEEN

(11) **EP 3 530 140 B1**
(45) Date de publication et mention de la délivrance du brevet: **12.08.2020**
(21) Numéro de dépôt: 19157745.1
(22) Date de dépôt: 18.02.2019
(51) Int. Cl.: A45D 33/26, A45D 40/18, A45D 44/00, A45C 11/00

(54) **BOÎTIER INTERACTIF POUR PRODUIT COSMÉTIQUE, NOTAMMENT DE MAQUILLAGE**
INTERAKTIVES GEHÄUSE FÜR EIN KOSMETIKPRODUKT, INSBESONDERE ZUM SCHMINKEN
INTERACTIVE BOX FOR COSMETIC PRODUCT, IN PARTICULAR MAKE-UP

(30) Priorité: 27.02.2018 FR 1851719
(43) Date de publication de la demande: 28.08.2019
(73) Titulaire: Albéa Services, 92230 Gennevilliers (FR)
(72) Inventeur: EZZINA, Emir, 78180 Montigny-le-Bretonneux (FR); BRIERE, Etienne, 75018 Paris (FR); BAZINVAL, Melodie, 95170 Deuil-la-Barre (FR); SEGUIN, Franck, 95430 Auvers-Sur-Oise (FR)
(74) Mandataire: Gevers & Orès

(56) Documents cités:
- WO-A1-2017/090914
- WO-A1-2017/161098
- US-A1- 2003 041 871
- US-A1- 2018 018 482

## Description

### DOMAINE TECHNIQUE DE L'INVENTION

L'invention concerne un boîtier interactif pour produit cosmétique, notamment de maquillage.

L'invention concerne plus particulièrement un boîtier pour produit cosmétique comportant au moins une base et un couvercle qui sont montés mobiles l'un par rapport à l'autre entre au moins une position fermée et une position ouverte du boîtier pour pouvoir accéder à des moyens de support d'au moins un produit cosmétique.

### ÉTAT DE LA TECHNIQUE

On connaît de l'état de la technique de nombreux exemples de conception de boîtiers utilisés pour le conditionnement de produit(s) cosmétique(s), notamment mais non exclusivement de produits de maquillage.

Un tel boîtier est encore appelé parfois « compact » peut présenter des dimensions comme des formes très variées (ronde, parallélépipédique, etc.), notamment en fonction du type de produit(s) cosmétique(s) conditionné(s) dans le boîtier.

Le boîtier est généralement destiné à pouvoir être transporté facilement, d'où son appellation de « compact », en assurant la protection des produits cosmétiques contenus à l'intérieur du boîtier.

Les boîtiers sont en particulier utilisés pour conditionner des produits de maquillage tels que des fards, des poudres ou d'autres produits similaires employés pour l'embellissement du visage.

De nombreux boîtiers comportent ainsi un miroir logé à l'intérieur du couvercle, ainsi parfois qu'un applicateur de produit tel qu'une éponge, un pinceau, etc.

On recherche aujourd'hui de nouvelles conceptions de boîtiers permettant notamment de proposer aux utilisatrices de nouveaux services, tout particulièrement en relation avec le ou les produits cosmétiques conditionnés.

### BREF RESUME DE L'INVENTION

Dans ce but, l'invention propose un boîtier pour produit cosmétique, selon la revendication 1, comportant au moins une base et un couvercle qui sont montés mobiles l'un par rapport à l'autre entre au moins une position fermée et une position ouverte du boîtier dans laquelle des moyens de support d'au moins un produit cosmétique sont accessibles, ledit boîtier étant caractérisé en ce que le couvercle est configuré pour recevoir au moins des moyens d'affichage, la base comporte au moins un logement destiné à comporter lesdits moyens de support et en ce que le boîtier comporte un dispositif de traitement de données du type sans contact qui est au moins apte à lire une ou des données contenues dans au moins un support de données solidaire desdits moyens de support lorsque lesdits moyens de support sont montés dans ledit au moins un logement et le dispositif de traitement de données comporte au moins une première partie qui est agencée dans la base et une deuxième partie qui est agencée dans le couvercle, lesdites première et deuxième parties étant reliées électriquement par au moins une nappe.

Avantageusement, les moyens d'affichage de type électronique sont aptes à délivrer des informations en relation avec la ou les données contenues dans ledit au moins un support de donnée(s) qui est associé aux moyens de support du ou des produits cosmétiques.

Comme les moyens de support dudit au moins un produit cosmétique sont avantageusement amovibles et ce faisant interchangeables, le boîtier est par conséquent susceptible de recevoir différents moyens de support formant par exemple une recharge ce qui offre à l'utilisatrice la possibilité d'en changer à volonté et en toute liberté.

Un tel changement des moyens de support peut par exemple être motivé par l'envie de changer la nature et/ou la teinte du ou des produit(s) cosmétique(s) ou encore le besoin de recharger le boîtier après une utilisation complète du ou d'au moins un des produit(s) cosmétique(s).

Grâce audit au moins un support de donnée(s) qui est solidaire des moyens de support, les moyens de support sont susceptibles d'embarquer une ou des donnée(s) concernant par exemple des informations en relation avec le ou les produits cosmétiques contenues dans lesdits moyens de support.

Pour chaque nouveau moyen de support monté en position d'utilisation dans la base du boîtier, il est ainsi possible de délivrer sélectivement, après la lecture de la ou des données contenues dans ledit au moins un support de données, des informations à l'utilisatrice.

De telles informations peuvent notamment mais non exclusivement porter sur le ou les produits cosmétiques, des conseils d'utilisation, etc. ou encore consister à proposer des services associés.

Avantageusement, les informations ou services sont délivrés à l'utilisatrice par l'intermédiaire des moyens d'affichage que comporte le couvercle du boîtier.

Avantageusement, les moyens d'affichage sont constitués par au moins un écran qui est préférentiellement tactile à l'instar de celui d'un téléphone portable du type « smartphone ».

Avantageusement, les moyens d'affichage comportent par exemple une application susceptible d'exploiter une ou des données contenues dans le support de données, lequel est préférentiellement formé par une étiquette NFC, pour délivrer des informations et/ou des services à l'utilisatrice.

Un tel boîtier interactif offre de nouvelles possibilités et de multiples avantages et cela tant pour les utilisatrices que pour les fabricants et/ou les vendeurs de produits cosmétiques.

Grâce au boîtier selon l'invention, il est en outre possible de délivrer à l'utilisatrice de multiples informations, en particulier sur l'utilisation du ou des produits cosmétiques, sur de nouveaux produits ou des tendances (dernières innovations d'une marque, etc.), de proposer une sélection de produits en fonction notamment des produits cosmétiques utilisés dans le boîtier et/ou de caractéristiques personnelles (couleur des yeux, de la peau, etc.) de l'utilisatrice.

Par l'intermédiaire de l'écran et d'une application comme un tutoriel, il est par exemple possible de délivrer des conseils pour choisir dans une gamme de différents produits cosmétiques un ou des produits en rapport avec les besoins identifiés de l'utilisatrice, des conseils pour l'application du ou des produits.

Avantageusement, le boîtier interactif comporte des moyens de communication qui sont susceptibles d'échanger des données, notamment par l'intermédiaire d'une connexion sans fil, par exemple une connexion Wi-Fi, grâce à quoi le boîtier est à même de se connecter à un réseau tel qu'internet.

De préférence, de tels moyens de communication sont intégrés aux moyens d'affichage formés par au moins un écran.

Avantageusement, le boîtier interactif selon l'invention comporte un téléphone portable de type smartphone dont l'écran tactile constitue les moyens d'affichage et qui est susceptible de nombreuses autres fonctionnalités comme celle précitée d'échanger des données par l'intermédiaire d'une connexion sans fil et plus particulièrement avec internet.

Avantageusement, lorsque le boîtier comporte un appareil photo (ou une caméra) associé à l'écran, il est alors possible pour l'utilisatrice de faire des autoportraits (ou « selfies ») notamment après s'être maquillée avec au moins un produit et de partager ensuite son expérience sur internet, par exemple sur les réseaux dits « sociaux ».

Lorsque le boîtier comporte un téléphone portable, il offre alors les mêmes fonctionnalités, comme par exemple la possibilité pour l'utilisatrice de réaliser des commandes de produits cosmétiques via internet en utilisant l'écran tactile et cela afin de se faire livrer directement une commande de produits cosmétiques sur le lieu de son choix, tel que son domicile.

Avantageusement, le boîtier comporte un couvercle qui est configuré pour recevoir des moyens d'affichage et tout particulièrement un appareil tel qu'un téléphone portable.

De préférence, le téléphone portable est amovible par rapport au couvercle du boîtier grâce à quoi il est possible pour l'utilisatrice d'y associer son téléphone portable personnel.

En effet, le boîtier est susceptible d'être proposé sans moyens d'affichage lorsque le couvercle est configuré pour recevoir un appareil tel qu'un téléphone portable.

Le téléphone portable est aujourd'hui devenu un appareil incontournable du quotidien qui est utilisé à chaque instant et par l'intermédiaire duquel de plus en plus de services sont proposés.

Avantageusement, le boîtier offre également de nombreux avantages pour une marque de produits cosmétiques en lui donnant la possibilité d'établir un meilleur contact avec les utilisatrices de ses produits, ce qui est de nature à renforcer leur fidélité à la marque.

L'utilisation du boîtier en relation avec internet est susceptible d'offrir une sensibilisation à la marque des autres utilisatrices, en particulier au travers d'échanges d'informations entre les utilisatrices sur les réseaux sociaux.

Le boîtier interactif est encore à même de permettre de mieux comprendre les besoins des utilisatrices en délivrant des informations qui peuvent être analysées par une marque pour améliorer l'ensemble des services proposées, depuis la vente, jusqu'à la fabrication, la gestion des stocks de produits cosmétiques.

Dans ce but, les moyens de support d'au moins un produit cosmétique pour un boîtier selon l'invention, peuvent comporter au moins un support de données.

Les moyens de support comportent au moins un support de données apte à être au moins lu par un dispositif de traitement de données intégré au boîtier, ledit au moins un support de données étant préférentiellement constitué par une étiquette de type NFC.

Avantageusement, il est proposé des moyens de support comportant au moins un produit cosmétique afin d'offrir une recharge destinée à un tel boîtier grâce à quoi le boîtier n'est pas limité à un usage unique.

### Selon d'autres caractéristiques de l'invention :

- lesdits moyens de support comportant ledit au moins un support de données sont amovibles ;
- le boîtier comporte des moyens d'assistance à l'extraction pour faciliter le retrait desdits moyens de support interchangeables hors du logement ;
- le boîtier étant du type dans lequel des moyens d'articulation sont agencés entre le couvercle et la base pour former une charnière afin de pouvoir les déplacer entre lesdites positions fermée et ouverte, les moyens d'articulation sont configurés pour présenter un passage destiné à ladite nappe reliant la première partie et la deuxième partie du dispositif de traitement de données ;
- la première partie du dispositif de traitement de données est apte à communiquer avec ledit au moins un support de données que comportent les moyens de support et la deuxième partie du dispositif de traitement de données est apte à communiquer avec au moins les moyens d'affichage ;
- ledit au moins un support de données est une étiquette du type NFC ;
- le boîtier comporte des moyens d'affichage qui sont en permanence solidaire du couvercle ou amovible par rapport audit couvercle ;
- les moyens d'affichage comportent au moins un écran appartenant à un appareil électronique, en particulier à un téléphone portable.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective qui représente en éclaté un exemple de réalisation d'un boîtier pour produit cosmétique selon l'invention et qui en illustre les principales pièces ;
- la figure 2 est une vue en perspective qui représente le boîtier selon la figure 1 et qui illustre ledit boîtier en position fermée ;
- la figure 3 est une vue en coupe qui représente le boîtier selon le plan de coupe III-III illustré à la figure 2 et qui illustre l'agencement du dispositif de traitement de données, des moyens d'affichage et des moyens de support à l'intérieur de la base et du couvercle d'un boîtier selon la figure 1 ;
- la figure 4 est une vue en perspective qui représente un boîtier selon la figure 1 en position ouverte et qui illustre, avant leur montage dans un logement associé de la base du boîtier, des moyens de support d'au moins un produit cosmétique qui comportent ledit au moins un support de données ;
- la figure 5 est une vue en perspective analogue à la figure 4 qui représente le boîtier en position ouverte et qui illustre les moyens de support d'au moins un produit cosmétique en position d'utilisation, après leur montage à l'intérieur du logement de la base ;
- la figure 6 est une vue en coupe qui représente le boîtier en position ouverte selon la figure 5 et qui illustre l'agencement du dispositif de traitement de données, des moyens d'affichage et des moyens de support à l'intérieur de la base et du couvercle d'un boîtier selon la figure 1 ;
- la figure 7 est une vue en perspective qui représente avec une mise en transparence le boîtier selon la figure 1 et la pièce d'habillage et qui illustre, au niveau des moyens d'articulation formant la charnière du boîtier, le passage ménagé pour la nappe reliant les deux parties du dispositif de traitement de données ;
- la figure 8 est une vue en perspective qui représente la pièce d'habillage ôtée sur la figure 7 et qui en illustre notamment l'encoche participant à l'obtention dudit passage pour la nappe.

### DESCRIPTION DETAILLEE DES FIGURES

Dans la suite de la description, on adoptera à titre non limitatif les orientations longitudinale, verticale et transversale en référence au trièdre (L, V, T) représenté sur les figures.

Par convention, les orientations longitudinale et transversale sont déterminées de manière fixe par rapport au à la base du boîtier de sorte que la position ouverte ou fermée du couvercle du boîtier est sans incidence sur les orientations longitudinale et transversale.

On utilisera également à titre non limitatif les termes « supérieur » et « inférieur » en référence à l'orientation verticale du trièdre (L, V, T). De plus, les termes « interne ou intérieur» et « externe ou extérieur» sont respectivement utilisés par rapport au boîtier et d'une manière générale pour désigner un élément situé soit dedans, soit sur le dehors du boîtier.

Par convention encore, les termes « avant » et « arrière » sont utilisés en référence à l'orientation longitudinale du trièdre (L, V, T), le boîtier s'ouvrant par une rotation du couvercle de l'avant vers l'arrière autour de l'axe O de rotation déterminé par les moyens d'articulation agencés à l'arrière du boîtier et les termes « gauche » et « droite » sont utilisés en référence à l'orientation transversale du trièdre (L, V, T).

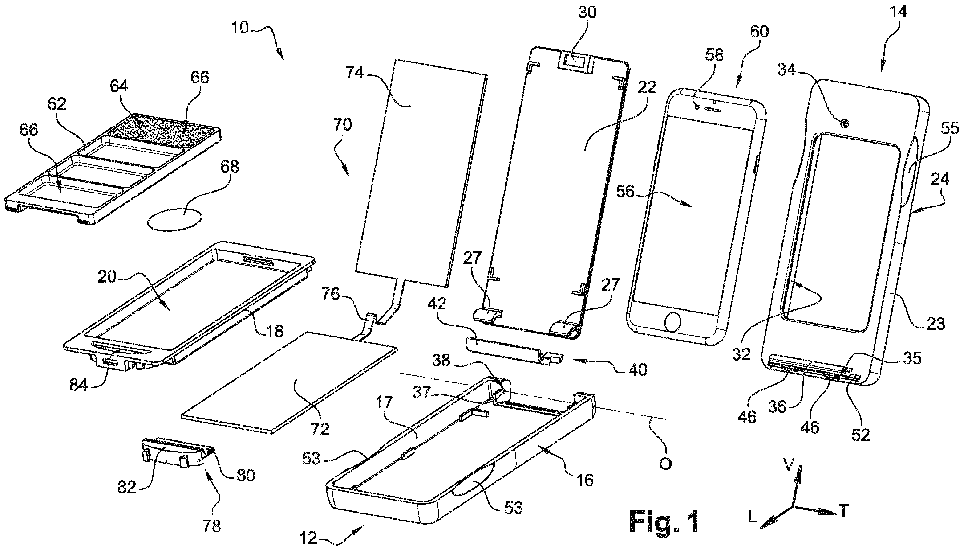

On a représenté sur la figure 1 un exemple d'un boîtier 10 pour produit cosmétique réalisé conformément aux enseignements de l'invention.

Selon l'exemple de la figure 1, le boîtier 10 présente de manière non limitative une forme générale parallélépipédique.

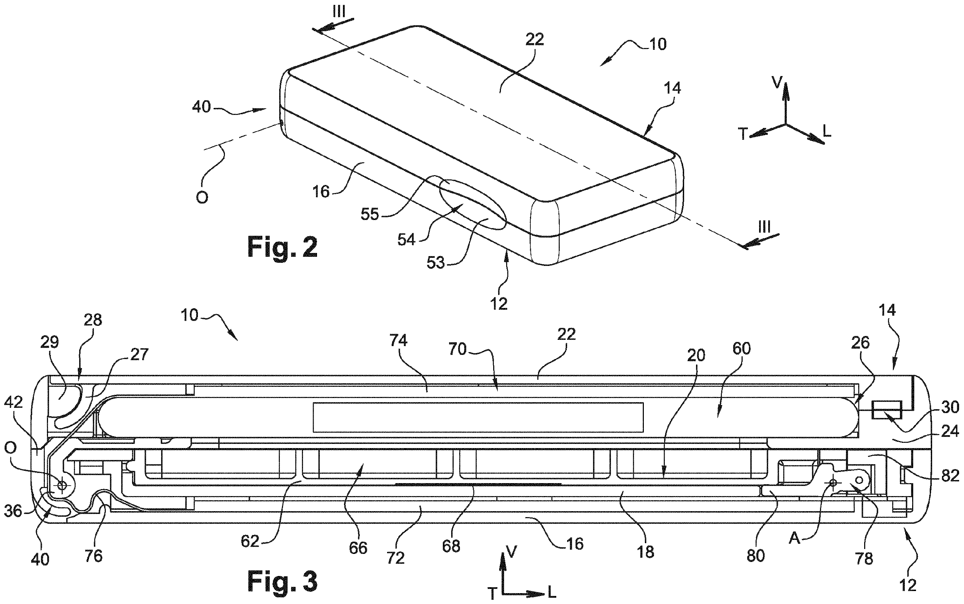

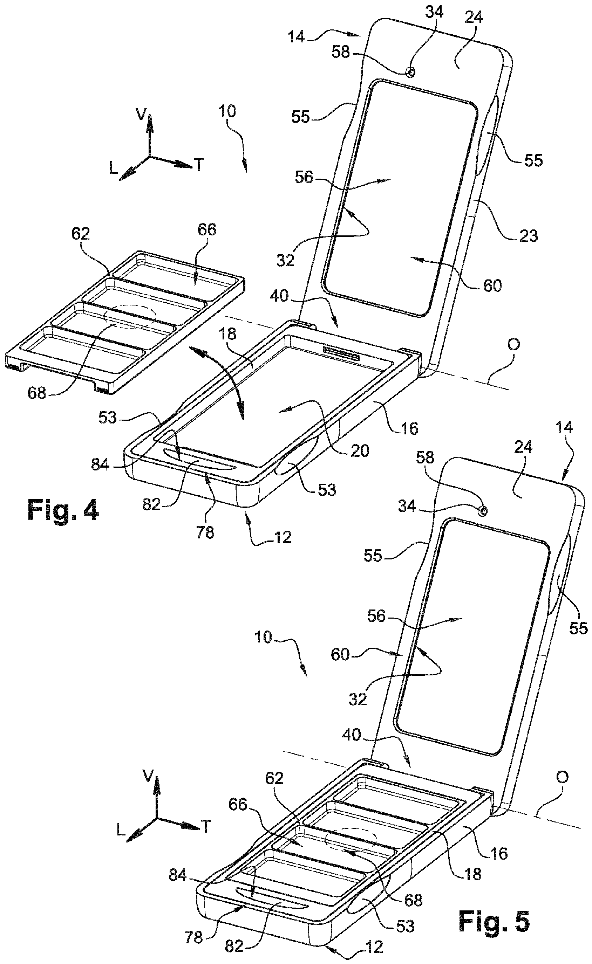

Le boîtier 10 pour produit cosmétique comporte au moins une base 12 et un couvercle 14 qui sont montés mobiles l'un par rapport à l'autre entre au moins une position fermée (figure 2) et une position ouverte (figure 5).

La position fermée du boîtier correspond à une position dans laquelle le ou les produits cosmétiques contenus dans le boîtier sont protégés, notamment en vue de leur transport.

La position ouverte correspond à une position dans laquelle le ou les produits cosmétiques sont rendus accessibles, notamment en vue de leur utilisation.

De préférence, la base 12 est réalisée en deux pièces, respectivement une pièce 16 extérieure et une pièce 18 intérieure.

La pièce 16 extérieure de la base 12 présente une forme générale de coque délimitée sur son pourtour par un bord 17. La pièce 18 intérieure est destinée à être montée à l'intérieur de la pièce 16 extérieure.

Avantageusement, une telle réalisation en deux pièces 16, 18 de la base 12 permet de choisir librement les matériaux de chacune des pièces.

La pièce 16 extérieure constitue ici le fond du boîtier 10, ladite pièce 16 étant par exemple susceptible d'être réalisée dans un matériau présentant un aspect esthétique ou encore revêtue d'une couche pour lui conférer une finition particulière, notamment de type métallisée.

La pièce 18 intérieure comporte au moins un logement 20.

De préférence, le couvercle 14 est réalisé en deux pièces, respectivement une pièce 22 extérieure et une pièce 24 intérieure.

La pièce 22 extérieure du couvercle 14 présente ici une forme de plaque qui constitue le dessus du boîtier 10, en particulier visible lorsque le boîtier 10 est en position fermée comme illustrée sur la figure 2.

La pièce 24 intérieure présente une forme générale de coque délimitée sur son pourtour par un bord 23.

Après assemblage, la pièce 22 extérieure et la pièce 24 intérieure délimitent ensemble une cavité 26 interne.

Avantageusement, la pièce 22 extérieure et la pièce 24 intérieure sont montées articulées l'une par rapport à l'autre par l'intermédiaire de moyens 28 d'articulation.

Dans l'exemple de réalisation, les moyens 28 d'articulation comportent une paire de bras 27 qui, solidaires de la pièce 22 extérieure, sont destinés à coopérer avec deux plots 29 solidaires de la pièce 24 intérieure.

De préférence, les bras 27 et les plots 29 forment les moyens 28 d'articulation par pivotement et sont respectivement agencés à l'opposé l'un de l'autre selon la direction transversale de manière à laisser centralement un dégagement, un espace libre entre eux.

Les moyens 28 d'articulation entre la pièce 22 extérieure et la pièce 24 intérieure sont ici disposés au niveau de l'extrémité du couvercle 14 qui est destinée à être reliée à la base 12.

En variante, les moyens 28 d'articulation sont agencés entre deux autres bords des pièces 22 et 24 par exemple de manière à présenter un axe de pivotement perpendiculaire à un axe O de rotation du boîtier qui sera décrit ultérieurement.

Avantageusement, le couvercle 14 comporte des moyens 30 de fixation destinés à fixer ensemble, de manière réversible, la pièce 22 extérieure et la pièce 24 intérieure.

De préférence, les moyens 30 de fixation sont agencés à l'opposé des moyens 28 d'articulation, ici à l'autre extrémité du couvercle 14.

Les moyens 30 de fixation sont par exemple formés par des aimants ou des moyens de formes complémentaires coopérant ensemble, par friction ou par emboîtement élastique, ou formés par tout autre moyen équivalent.

Grâce aux moyens 28 d'articulation, la pièce 22 extérieure et la pièce 24 intérieure sont montées mobiles entre une position de fermeture et une position d'ouverture.

Avantageusement, il est possible d'écarter temporairement la pièce 22 extérieure par rapport à la pièce 24 intérieure, en particulier de les entrebâiller, de manière à permettre un accès à la cavité 26 interne ménagée dans le couvercle 14.

La pièce 24 intérieure comporte une fenêtre 32, ici de forme rectangulaire. De plus, la pièce 24 intérieure comporte une ouverture 34, ici de forme circulaire.

Le boîtier 10 comporte des moyens 40 d'articulation qui sont agencés entre le couvercle 14 et la base 12 de manière à former une charnière.

Avantageusement, les moyens 40 d'articulation permettent de déplacer le couvercle 14 et la base 12 relativement l'un par rapport à l'autre entre lesdites positions fermée et ouverte du boîtier.

Les moyens 40 d'articulation comportent une première partie 36 mobile qui est montée centralement entre une deuxième partie 38 fixe, lesdites première partie 36 et deuxième partie 38 étant destinées à être reliées transversalement par une broche (non représentée) pour former ladite charnière.

De manière connue, la broche est par exemple formée par une tige métallique qui est insérée transversalement à travers au moins un perçage 35 de la première partie 36 mobile et un perçage 37 de la deuxième partie 38 fixe.

Les moyens 40 d'articulation du boîtier 10 comportent ledit axe O de rotation qui est ici déterminé par ladite broche reliant entre elles lesdites première partie 36 et deuxième partie 38.

De préférence, la première partie 36 mobile est solidaire de la pièce 24 intérieure du couvercle 14 et la deuxième partie 38 fixe est solidaire de la pièce 16 extérieure de la base 12.

Avantageusement, le boîtier 10 comporte une pièce 42 d'habillage agencée au niveau des moyens 40 d'articulation entre le couvercle 14 et la base 12, notamment destinée à les masquer.

La pièce 42 d'habillage coopère avec la première partie 36 mobile des moyens 40 d'articulation de manière à ménager entre elles un espace dans le but de former un passage 44.

La pièce 42 d'habillage est liée à la première partie 36 mobile des moyens 40 d'articulation par l'intermédiaire de moyens de liaison 46 et 48 destinés à coopérer ensemble.

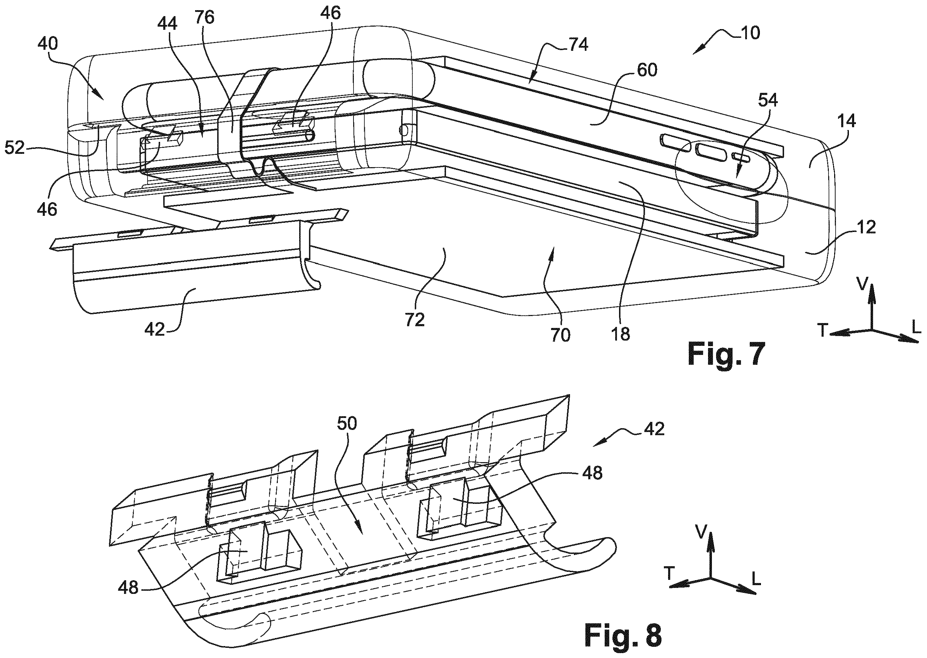

La pièce 42 d'habillage est plus particulièrement visible sur la figure 8 et on se reportera également à la figure 7.

Les moyens 46 et 48 de liaison comportent par exemple une paire d'éléments 46 mâles portés par la première partie 36 et une paire d'éléments 48 femelles qui, présentant des formes complémentaires de celles des éléments 46 mâles, sont réalisés dans la pièce 42 d'habillage.

De préférence, lesdits éléments 46 mâles de la première partie 36 mobile présentent une forme en queues d'arondes qui est plus particulièrement visible sur la figure 7.

La paire d'éléments 48 femelles de la pièce 42 d'habillage sont plus particulièrement visibles sur la figure 8 qui illustre également une encoche 50 ménagée à l'intérieur de ladite pièce 42.

L'encoche 50 de la pièce 42 d'habillage participe à l'obtention du passage 44 ménagé au niveau des moyens 40 d'articulation formant une charnière.

La pièce 24 intérieure du couvercle 14 comporte une fente 52 qui est agencée en dessous de la première partie 36 mobile et qui s'étend transversalement.

La fonction du passage 44 ainsi que de la fente 52 seront décrites plus en détail ultérieurement.

De préférence, le boîtier 10 comporte des moyens 54 de préhension pour faciliter l'ouverture du boîtier. Les moyens 54 de préhension sont par exemple formés par au moins une entaille.

L'entaille 54 se divise en deux parties qui sont juxtaposées en position fermée du couvercle 14, respectivement une partie 53 réalisée dans le bord 17 de la pièce 16 extérieure de la base 12 et une autre partie 55 réalisée dans le bord 23 de la pièce 22 extérieure du couvercle 14.

Avantageusement, le boîtier 10 comporte une entaille 54 de chaque côté selon la direction transversale, l'une à gauche et l'autre à droite, de manière à en faciliter la préhension par exemple par le pouce et l'index de l'utilisatrice.

Avantageusement, le boîtier 10 comporte au moins des moyens 56 d'affichage. Le couvercle 14 est ainsi configuré pour recevoir au moins de tels moyens 56 d'affichage.

Les moyens 56 d'affichage sont destinés à être agencés dans le couvercle 14, plus précisément dans la cavité 26 formée entre la pièce 22 extérieure et la pièce 23 intérieure.

Les moyens 56 d'affichage du boîtier 10 comportent au moins un écran lequel est avantageusement un écran tactile.

Avantageusement, le boîtier 10 comporte au moins des moyens 58 de prise de vues, tels qu'un appareil photo et/ou une caméra, qui sont aptes à communiquer avec lesdits moyens 56 d'affichage.

De préférence, les moyens 56 d'affichage formés par ledit écran sont amovibles par rapport audit couvercle 14 du boîtier 10.

En variante, les moyens 56 d'affichage formés par ledit écran sont fixés au couvercle 14, montés de manière permanente.

Dans une telle variante de boîtier 10 intégrant en permanence un écran 56, les moyens 28 d'articulation décrits précédemment sont avantageusement supprimés et les moyens 30 de fixation ont alors pour fonction de fixer ensemble la pièce 22 extérieure et la pièce 23 intérieure sans nécessairement que la fixation obtenue présente un caractère réversible.

Grâce aux moyens 28 d'articulation, la pièce 22 extérieure et la pièce 23 intérieure sont susceptibles d'être déplacées l'une par rapport l'autre de la position de fermeture vers la position d'ouverture de manière à accéder à la cavité 26 pour y loger ou en extraire au moins lesdits moyens 56 d'affichage.

Avantageusement, ledit au moins un écran 56 constituant les moyens d'affichage appartient à un appareil 60 électronique, notamment un téléphone portable de type « *smartphone* » ou une tablette.

Dans l'exemple, le couvercle 14 du boîtier 10 est configuré pour recevoir un téléphone 60. Le téléphone 60 illustré à la figure 1 est logé dans la cavité 26 dans laquelle il est maintenu en place.

Avantageusement, un tel téléphone 60 comporte ledit au moins un écran 56 tactile et lesdits moyens 58 de prise de vues.

En position ouverte du boîtier 10 et tel qu'illustré sur les figures 4 et 5, l'écran 56 est visible et accessible à travers la fenêtre 32 de la pièce 24 intérieure du couvercle 14.

L'ouverture 34 est positionnée sur la pièce 24 intérieure du couvercle 14 pour se trouver en coïncidence avec lesdits moyens 58 de prise de vues.

Grâce aux moyens 58 de prise de vues intégrés dans le couvercle 14, l'écran 56 est susceptible d'être utilisé comme un miroir afin notamment de permettre à l'utilisatrice de se maquiller.

Le boîtier 10 est destiné à comporter des moyens 62 de support d'au moins un produit 64 cosmétique.

Avantageusement, les moyens 62 de support sont amovibles de sorte que, interchangeables, lesdits moyens 62 sont susceptibles d'être librement changés par l'utilisatrice.

On a représenté sur la figure 1 et les suivantes un exemple non limitatif de tels moyens 62 de support, se présentant globalement sous la forme d'un plateau.

Dans l'exemple, les moyens 62 de support comportent quatre godets 66 destinés à recevoir chacun un produit 64 cosmétique qui a été illustré sur la figure 1 par des points (dans l'un seulement des godets 66).

En variante, les moyens 62 de support comportent un seul godet ou encore au moins un réservoir.

Les moyens 62 de support sont configurés pour recevoir au moins un produit 64 cosmétique de sorte que la structure desdits moyens 62 de support est adaptée au type de produit cosmétique, notamment de manière à pouvoir en permettre le stockage.

De manière non limitative, il peut s'agir d'un produit 64 cosmétique du même type, comme par exemple un fard ou une poudre, mais présentant des teintes (ou couleurs) différentes dans chacun desdits godets 66 afin de proposer une palette de maquillage.

Les moyens 62 de support sont destinés à être montés de dans le logement 20 de la pièce 18 intermédiaire de la base 12 du boîtier 10.

Tel qu'illustré notamment par les figures 4 et 5, lesdits moyens 62 de support sont amovibles, susceptibles d'être montés dans ou extraits hors du logement 20.

De préférence, les moyens 62 de support sont maintenus en position d'utilisation dans le logement 20 par un emboîtement ajusté avec la pièce 18 intérieure.

En variante, la base 12 du boîtier 10 pourrait comporter des moyens de blocage intervenant entre lesdits moyens 62 de support et la base 12 pour immobiliser lesdits moyens 62 de support dans la position d'utilisation illustrée sur la figure 5.

Avantageusement, les moyens 62 de support du ou des produits 64 cosmétiques sont susceptibles d'être ôtés du boîtier 10 par l'utilisatrice, notamment dans le but d'être changés ou renouvelés.

L'utilisatrice peut en effet vouloir changer lesdits moyens 62 de support pour différentes raisons, par exemple pour recharger le boîtier 10 lorsqu'au moins un des produits 64 cosmétiques présents dans les godets 66 des moyens 62 de support a été entièrement utilisé.

Avantageusement, les nouveaux moyens 62 de support mis en place comportant le ou les produits 64 cosmétiques constituent alors une recharge pour le boîtier 10.

L'utilisatrice peut aussi vouloir changer lesdits moyens 62 de support pour simplement utiliser d'autres types de produits 64 cosmétiques, voir également pouvoir disposer d'autres teintes en fonction de ses besoins.

Avantageusement, le boîtier 10 peut être commercialisé séparément ou avec un jeu de plusieurs moyens 62 de support afin de proposer à l'utilisatrice une gamme de teintes différentes, ainsi que des recharges individuelles pour renouveler chacun des moyens 62 de support.

Avantageusement, il est proposé un distributeur dans lequel plusieurs moyens 62 de support sont susceptibles d'être stockés lorsqu'ils ne sont pas utilisés dans le boîtier 10, tout ou au moins une partie de ces moyens 62 de support pouvant par ailleurs avoir ou non déjà été utilisé au moins une fois.

Selon une caractéristique importante de l'invention, les moyens 62 de support comportent au moins un support 68 de données.

De préférence, ledit au moins un support 68 de données est constitué par une étiquette NFC (acronyme en anglais pour « *Near Field Communication* »), parfois aussi appelé CCP en français pour « *Communication en Champ Proche* ».

Dans la présente description, le terme « étiquette » est utilisé de manière large et non limitative, ce terme englobant par exemple ici également ceux de « transpondeur », de « puce » ou de « tag ».

La technologie NFC est une technologie de communication sans fil à courte portée et à haute fréquence, permettant l'échange d'informations entre différents moyens compatibles.

En variante, ledit au moins un support 68 de données est une étiquette RFID (acronyme en anglais pour « *Radio Frequency Identification* »).

En effet, on pourrait utiliser d'autre technologie de communication sans fil que la technologie NFC comme la technologie RFID ou encore la technologie BLE acronyme en anglais pour « *Bluetooth Low Energy* ».

Avantageusement, ledit au moins un support 68 de données est solidaire desdits moyens 62 de support comportant le ou les produits 64 cosmétiques.

Tel qu'illustré sur les figures, ledit au moins un support 68 de données formé par l'étiquette NFC est par exemple fixé en dessous des moyens 62 de support. Ledit au moins un support 68 de données est par exemple fixé aux moyens 62 de support par collage ou tout autre moyen approprié.

Avantageusement, ledit au moins un support 68 de données et les moyens 62 de support constituent donc un sous-ensemble unitaire.

Ledit au moins un support 68 de données comporte par exemple une ou des données qui sont associées audit au moins un produit 64 cosmétique que comportent lesdits moyens 62 de support interchangeables.

Conformément à l'invention, le boîtier 10 comporte un dispositif 70 de traitement de données qui est au moins apte à lire une ou des données contenues dans ledit au moins un support 68 de données associé aux moyens 62 de support lorsque lesdits moyens 62 de support sont montés dans ledit au moins un logement 20, c'est-à-dire en position d'utilisation.

Avantageusement, le dispositif 70 de traitement de données est du type sans contact, notamment apte à lire une étiquette NFC formant ledit au moins un support 68 de données.

Avantageusement, le dispositif 70 de traitement de données fonctionne sans aucun apport d'énergie électrique, en particulier pas de batterie.

Le dispositif 70 de traitement de données comporte au moins une première partie 72 qui est agencée dans la base 12 et une deuxième partie 74 qui est agencée dans le couvercle 14.

Selon l'invention, lesdites première et deuxième parties 72 et 74 du dispositif 70 de traitement de données sont reliées par au moins une nappe 76.

De préférence, la nappe 76 est souple ou semi-rigide pour pouvoir relier électriquement la première partie 72 et la deuxième partie 74 à travers les moyens 40 d'articulation du boîtier 10.

Tel que décrit précédemment, les moyens 40 d'articulation sont configurés pour présenter un passage 44 dans lequel est logée ladite nappe 76, comme cela est plus particulièrement visible sur la figure 7.

Le passage 44, ainsi que la pièce 42 d'habillage, permettent de cacher totalement la nappe 76 de manière que la nappe 76 ne soit pas visible depuis l'extérieur, comme depuis l'intérieur, du boitier 10.

La nappe 76 est disposée centralement dans le passage 44, c'est à dire transversalement entre les éléments 46 mâles des moyens de liaison avec la pièce d'habillage 42 qui sont solidaires de la première partie 36 mobile des moyens 40 d'articulation.

La nappe 76 dispose ainsi d'un espace lui assurant de ne pas être endommagée, en particulier lors des manipulations d'ouverture et de fermeture du boîtier 10, et cela grâce également à l'encoche 50 en vis-à-vis que comporte la pièce 42 d'habillage.

Avantageusement, la nappe 76 est dissimulée à l'intérieur du boîtier 10 de manière à n'être jamais visible pour l'utilisatrice ce qui participe à l'obtention d'un boîtier 10 esthétique.

La nappe 76 traverse la fente 52 transversale de la pièce 24 intérieure du couvercle 14 afin d'être reliée à la deuxième partie 74 du dispositif 70 de traitement.

Grâce aux différentes caractéristiques qui viennent d'être décrites, on préserve la nappe 76 de toute détérioration et ce faisant le bon fonctionnement du dispositif 70 de traitement de données intégré dans le boîtier 10.

Avantageusement, la première partie 72 et la deuxième partie 74 du dispositif 70 de traitement sont planes, présentant globalement chacune la forme d'une plaque.

Grâce à leur faible épaisseur, la première partie 72 et la deuxième partie 74 dudit dispositif 70 de traitement de données sont respectivement intégrées dans le boîtier 10 sans en impacter l'encombrement général.

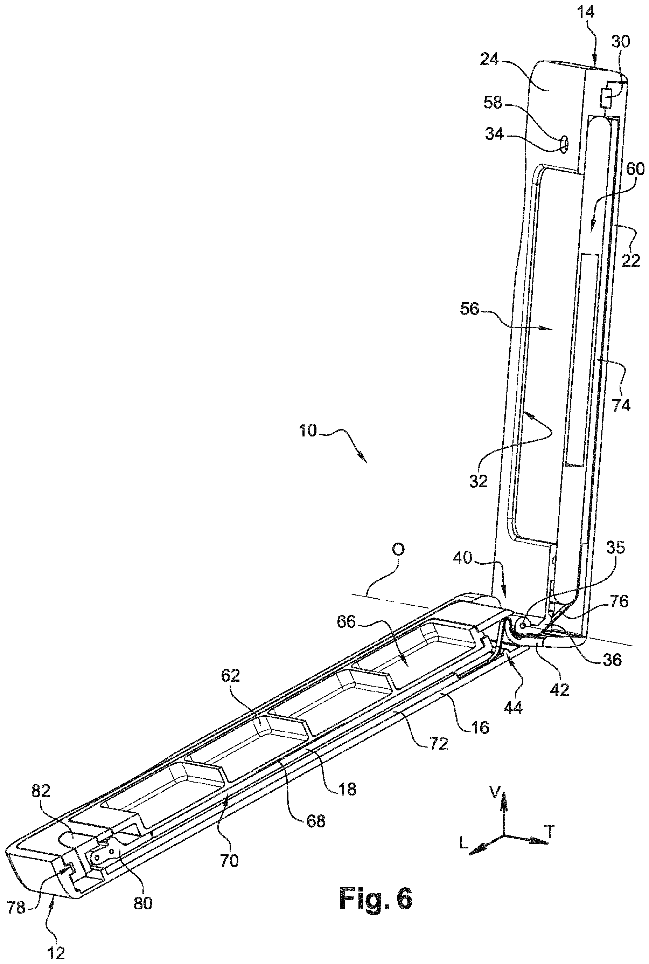

Tel qu'illustré sur les coupes des figures 3 et 6, ladite première partie 72 est agencée entre la pièce 16 extérieure de la base 12 et la pièce 18 intermédiaire.

Avantageusement, ladite première partie 72 s'étend en dessous d'au moins une partie du logement 20 de la pièce intermédiaire 18 (ici de la totalité du logement 20) dans lequel sont montés les moyens 62 de support en position d'utilisation.

La première partie 72 ainsi agencée est apte à pouvoir au moins lire ledit au moins un support 68 de données solidaire desdits moyens 62 de support, plus généralement apte à pouvoir communiquer avec lui.

De manière similaire, ladite deuxième partie 74 s'étend avantageusement entre la pièce 22 extérieure et le dos des moyens 56 d'affichage, ici du téléphone 60, c'est-à-dire du côté opposé à l'écran.

La première partie 72 du dispositif 70 de traitement de données est apte à communiquer avec ledit au moins un support 68 de données des moyens 62 de support.

La deuxième partie 74 du dispositif 70 de traitement de données est apte à communiquer avec des moyens (non représentés) d'échanges de données compatibles associés aux moyens 56 d'affichage, préférentiellement intégrés au téléphone 60 et utilisant la technologie NFC.

En position d'utilisation des moyens 62 de support dudit au moins un produit 64 cosmétique et comme on peut le voir sur les figures 3 et 5, ledit au moins un support 68 de données est disposé au-dessus et à une très faible distance de la première partie 72 du dispositif 70 de traitement de données.

En effet, l'espace séparant le support 68 de données et la première partie 72 du dispositif 70 est de l'ordre de quelques millimètres, correspondant ici à l'épaisseur de la paroi du fond de la pièce 18 intérieure de la base 12.

La première partie 72 est au moins apte à lire la ou les données contenues dans le support 68 de données.

De préférence, l'opération de lecture du support 68 de données est réalisée automatiquement par la première partie 72 du dispositif 70 de traitement, par exemple de manière itérative.

Avantageusement, la première partie 72 du dispositif 70 de traitement effectue au moins une opération de lecture après chaque changement des moyens 62 de support contenant le ou les produits 64 cosmétiques.

De préférence, la première partie 72 du dispositif 70 de traitement est également apte à écrire une ou des données dans le support 68 de données.

Avantageusement, l'écriture d'au moins une donnée dans le support 68 de données par la première partie 72 du dispositif 70 de traitement peut permettre d'y sauvegarder des données telle que la date de la première utilisation des moyens 62 de support dont est solidaire ledit support 68 de données, soit la date présumée de première utilisation du ou des produits 64 cosmétiques.

De telles données sont ensuite susceptibles d'être exploitées pour obtenir des informations comme par exemple une fréquence d'utilisation, etc. laquelle donnée peut être utilisée pour délivrer de nouveaux services à l'utilisatrice depuis la suggestion de produits correspondant à ceux utilisés le plus fréquemment jusqu'à la proposition de commande de recharge(s), etc.

Pour ce faire, la deuxième partie 74 du dispositif 70 de traitement est au moins apte à transférer la ou les données lues par ladite première partie 72 aux moyens (non représentés) d'échanges de données compatibles associés aux moyens 56 d'affichage, lesquels utilisant par exemple la technologie NFC sont avantageusement intégrés ici au téléphone 60.

La première partie 72 comme la deuxième partie 74 du dispositif 70 de traitement de données sont agencées à une très faible distance des moyens avec lesquels chacune est destinée à communiquer, respectivement ledit au moins un support 68 de données solidaire des moyens 62 de support et au moins lesdits moyens 56 d'affichage.

La technologie NFC est notamment préférée en raison de la très faible distance à laquelle peuvent s'effectuer les échanges de données en lecture et/ou en écriture dans le boîtier 10.

Avantageusement, le dispositif 70 de traitement de données est parfaitement intégré dans le boîtier 10 et la première partie 72 comme la deuxième partie 74 ne sont pas visibles par l'utilisatrice, quelle que soit la position ouverte ou fermée du boîtier 10.

Avantageusement, la première partie 72 est protégée par la pièce 18 intermédiaire, notamment des salissures provenant par exemple du ou des produits 64 cosmétiques.

Pour faciliter le retrait des moyens 62 de support hors du logement 20 et donc leur changement, la base 12 du boîtier 10 comporte avantageusement des moyens 78 d'assistance à l'extraction.

Les moyens 78 d'assistance comportent au moins un organe 80 d'extraction qui, formant un levier, est destiné à coopérer sélectivement avec lesdits moyens 62 de support.

Ledit au moins un organe 80 d'extraction est monté mobile entre au moins une position de repos et une position d'extraction dans laquelle ledit organe 80 d'extraction coopère avec lesdits moyens 62 de support afin d'en soulever au moins une partie hors dudit logement 20 de manière à en faciliter le retrait, et ce faisant la préhension par l'utilisatrice.

Dans l'exemple, les moyens 78 d'assistance sont agencés longitudinalement à l'avant du boîtier 10, c'est-à-dire à l'opposé des moyens 40 d'articulation.

Les moyens 78 d'assistance sont avantageusement intégrés dans la base 12 de manière à préserver l'esthétique générale du boîtier 10.

Ledit au moins un organe 80 d'extraction est par exemple monté pivotant autour d'un axe A transversal illustré sur la figure 3, respectivement entre la position de repos et la position d'extraction.

Ledit au moins un organe 80 d'extraction des moyens 78 d'assistance est commandé manuellement par l'intermédiaire d'un organe 82 de commande afin d'en provoquer le déplacement, ici le pivotement, de la position de repos vers la position d'extraction.

L'organe 82 de commande est par exemple formé par un bouton poussoir qui est rendu accessible par une ouverture 84 ménagée à cette fin dans la pièce 18 intérieure et par rapport à la surface de laquelle ledit organe 82 est avantageusement légèrement en saillie.

L'organe 82 de commande est actionné en lui appliquant un effort de poussée, verticalement vers le bas, ledit effort étant par exemple appliqué par l'utilisatrice à l'aide d'au moins l'un de ses doigts.

L'organe 82 de commande est alors guidé pour coulisser verticalement vers l'intérieur de la base 12 présentant un dégagement à cet effet.

L'organe 82 de commande va alors agir sur ledit au moins un organe 80 d'extraction auquel il est lié en déplacement pour en provoquer le pivotement autour de l'axe A, de la position de repos vers la position d'extraction.

Le déplacement de l'organe 80 d'extraction de la position de repos vers la position d'extraction s'accompagne d'un effort de poussée qui est appliqué sur les moyens 62 de support de manière à en provoquer le soulèvement.

De préférence, ledit au moins un organe 80 d'extraction (ou l'organe 82 de commande) est monté mobile à l'encontre de moyens de rappel élastique (non représentés) qui sont aptes à le rappeler automatiquement dans au moins l'une des positions de repos et d'extraction, avantageusement vers ladite position de repos.

En variante, ledit au moins un organe 80 d'extraction est rappelé vers la position de repos par les nouveaux moyens 62 de support lorsqu'ils sont introduits dans le logement 20 de la base 12.

Avantageusement, le boîtier 10 est susceptible d'être alimenté électriquement par une technologie de transmission d'énergie sans contact, par exemple par induction.

On connaît différentes solutions de transmission d'énergie sans contact, on citera à titre d'exemple non limitatif Qi™ (*marque déposée*).

Grâce à l'utilisation d'une telle technologie de transmission d'énergie sans contact, il est par exemple possible de recharger au moins une batterie d'alimentation destinée à alimenter en électricité les moyens 56 d'affichage, en particulier lorsque ces derniers sont montés à demeure dans le couvercle 14.

Dans l'exemple de réalisation qui vient d'être décrit ladite au moins une batterie est par exemple constituée par celle du téléphone 60 dont l'écran tactile est utilisé comme moyens 56 d'affichage du boîtier 10.

Lorsque le boîtier 10 comporte un couvercle 14 qui est conçu pour recevoir un téléphone 60, le chargement électrique peut être réalisé sans qu'il soit forcément nécessaire de le retirer de la cavité 26.

On décrira ci-après de manière non limitative des exemples d'utilisation et avantages obtenus avec un boîtier 10 interactif réalisé conformément aux enseignements de l'invention.

L'utilisatrice désireuse d'utiliser le boîtier 10 interactif va, pour se maquiller par exemple, tout d'abord procéder à son ouverture.

Pour ce faire, l'utilisatrice se saisit avantageusement du couvercle 14 au niveau des moyens 54 de préhension, ici formés par les entailles, et applique manuellement - tout en tenant la base 12 - un effort de traction sur le couvercle 14 pour provoquer la rotation du couvercle 14, autour de l'axe O de rotation des moyens 40 d'articulation, de la position fermée vers la position ouverte.

Dans l'exemple, l'inclinaison du couvercle 14 comportant les moyens 56 d'affichage en position ouverte est librement déterminée par l'utilisatrice de sorte que le couvercle 14 peut occuper angulairement par rapport à la base 12 plus d'une position ouverte.

De préférence, le dispositif 70 de traitement de données est dans un état actif lorsque le boîtier 10 est en position d'ouverture et dans un état de veille lorsque le boîtier 10 est en position fermée.

Le dispositif 70 de traitement de données et plus précisément la première partie 72 procède alors à la lecture des données que comporte l'étiquette 68 de type NFC qui est solidaire des moyens 62 de support montés dans le logement 20.

L'utilisatrice peut conserver les moyens 62 de support se trouvant en position d'utilisation lors de l'ouverture (en variante le logement 20 pourrait être vide) ou décider d'en changer.

En cas de changement des moyens 62 de support de produits 64 cosmétiques, l'utilisatrice actionne avantageusement l'organe 82 de commande des moyens 78 d'assistance à l'extraction pour provoquer le soulèvement de la partie avant desdits moyens 62 de support de manière à pouvoir aisément s'en saisir.

Avantageusement, les moyens 56 d'affichage formés par l'écran du téléphone 60 vont alors pouvoir délivrer à l'utilisatrice des informations en relation avec la ou les données contenues dans l'étiquette 68 de type NFC qui est fixée aux moyens 62 de support contenant le ou les produits 64 cosmétiques.

A titre d'exemple, les informations fournies par l'intermédiaire de l'écran 56 sont en relation avec le ou les produits 64 cosmétiques, il peut notamment s'agir de conseils d'utilisation sur le ou les produits cosmétiques ou encore de services associés, etc.

Lorsque l'écran 56 tactile appartient à un téléphone 60, de nombreuses possibilités d'utilisation interactive sont offertes à l'utilisatrice, mais également de nombreux avantages tels que ceux cités précédemment pour les fabricants et/ou les vendeurs de produits cosmétiques.

Le boîtier 10 muni d'un écran 56 tactile de téléphone offre des possibilités presque infinies d'interactivité avec l'utilisatrice.

Par l'intermédiaire de l'écran 56 tactile et d'une application comme un tutoriel intégré dans le téléphone 60, il est par exemple possible de délivrer des conseils pour aider l'utilisatrice à choisir un produit par rapport à une gamme de différents produits cosmétiques, lui donner des conseils d'application du produit, etc.

Avantageusement, le boîtier 10 est susceptible d'échanger des données par l'intermédiaire d'une connexion sans fil, notamment Wi-Fi, dans le but notamment de se connecter à internet.

Le boîtier 10 interactif offre de nombreux avantages pour une marque de produits cosmétiques en lui donnant la possibilité de renforcer son image de marque et la fidélité des utilisatrices de ses produits.

Bien entendu l'exemple de boîtier 10 qui vient d'être décrit n'est nullement limitatif et de nombreuses variantes de réalisation pourraient être envisagées sans sortir du cadre de l'invention.

En variante non représentée, le boîtier 10 comporte des moyens de verrouillage aptes à maintenir le couvercle 14 en position fermée.

En variante non représentée, le boîtier 10 comporte un couvercle 14 comportant au moins une pièce intermédiaire formant adaptateur afin de pouvoir accueillir différents modèles de téléphone.

En variante non représentée, le boîtier 10 comporte au moins un logement pour le rangement d'au moins un applicateur de produit cosmétique, notamment de maquillage.

Ledit au moins un logement pour l'applicateur est par exemple ménagé dans la base 12 ou dans le couvercle 14 du boîtier 10, ou encore intégré dans les moyens 62 de support.

En variante non représentée, le boîtier 10 comporte au moins un orifice pour permettre le raccordement d'un câble par exemple pour alimenter électriquement dans le but de la recharger une batterie associée au moins aux moyens 56 d'affichage appartenant préférentiellement à un téléphone 60.

De préférence, ledit orifice destiné à permettre le raccordement d'un câble tel qu'un câble d'alimentation électrique est notamment accessible en position fermée du boîtier 10.

Ainsi qu'on l'aura compris le boîtier 10 est susceptible d'être vendu avec ou sans moyens 56 d'affichage et avec ou sans moyens 62 de support d'au moins un produit 64 cosmétique.

Le boîtier 10 pour produit cosmétique comporte au moins une base 12 et un couvercle 14 qui sont montés mobiles l'un par rapport à l'autre entre au moins une position fermée et une position ouverte du boîtier dans laquelle des moyens 62 de support d'au moins un produit cosmétique sont accessibles, ledit boîtier 10 étant caractérisé en ce que le couvercle 14 comporte au moins des moyens 56 d'affichage, la base 12 comporte au moins un logement 20 dans lequel sont montés lesdits moyens 62 de support et en ce que le boîtier 10 comporte un dispositif 70 de traitement de données du type sans contact qui est au moins apte à lire une ou des données contenues dans au moins un support 68 de données solidaire desdits moyens 62 de support.

## Revendications

1. Boîtier (10) pour produit cosmétique comportant au moins une base (12) et un couvercle (14) qui sont montés mobiles l'un par rapport à l'autre entre au moins une position fermée et une position ouverte du boîtier dans laquelle des moyens (62) de support d'au moins un produit (64) cosmétique sont accessibles, le couvercle (14) étant configuré pour recevoir au moins des moyens (56) d'affichage, la base (12) comporte au moins un logement (20) destiné à comporter lesdits moyens (62) de support et le boîtier (10) comportant un dispositif (70) de traitement de données du type sans contact qui est au moins apte à lire une ou des données contenues dans au moins un support (68) de données solidaire desdits moyens (62) de support lorsque lesdits moyens (62) de support sont montés dans ledit au moins un logement (20), ledit boîtier étant **caractérisé en ce que** le dispositif (70) de traitement de données comporte au moins une première partie (72) qui est agencée dans la base (12) et une deuxième partie (74) qui est agencée dans le couvercle (14), lesdites première et deuxième parties (72, 74) étant reliées électriquement par au moins une nappe (76).

2. Boîtier selon la revendication 1, **caractérisé en ce que** lesdits moyens (62) de support comportant ledit au moins un support (68) de données sont amovibles.

3. Boîtier selon la revendication 2, **caractérisé en ce que** le boîtier (10) comporte des moyens (78) d'assistance à l'extraction pour faciliter le retrait desdits moyens (62) de support interchangeables hors du logement (20).

4. Boîtier selon l'une des revendications précédentes, dans lequel des moyens (40) d'articulation sont agencés entre le couvercle (14) et la base (12) pour former une charnière afin de pouvoir les déplacer entre lesdites positions fermée et ouverte, **caractérisé en ce que** les moyens (40) d'articulation sont configurés pour présenter un passage (44) destiné à ladite nappe (76) reliant la première partie (72) et la deuxième partie (74) du dispositif (70) de traitement de données.

5. Boîtier selon l'une des revendications précédentes, **caractérisé en ce que** la première partie (72) du dispositif (70) de traitement de données est apte à communiquer avec ledit au moins un support (68) de données que comportent les moyens (62) de support et la deuxième partie (74) du dispositif (70) de traitement de données est apte à communiquer avec au moins les moyens (56) d'affichage.

6. Boîtier selon l'une quelconque des revendications précédentes, **caractérisé en ce que** ledit au moins un support (68) de données est une étiquette du type NFC.

7. Boîtier selon l'une quelconque des revendications précédentes, **caractérisé en ce que** le boîtier (10) comporte des moyens (56) d'affichage qui sont en permanence solidaire du couvercle (14) ou amovible par rapport audit couvercle (14).

8. Boîtier selon la revendication 7, **caractérisé en ce que** les moyens (56) d'affichage comportent au moins un écran (56) appartenant à un appareil (60) électronique, en particulier à un téléphone portable.

## Patentansprüche

1. Gehäuse (10) für ein Kosmetikprodukt, umfassend mindestens eine Basis (12) und einen Deckel (14), die zwischen mindestens einer geschlossenen Position und einer offenen Position des Gehäuses, bei der Tragemittel (62) mindestens eines Kosmetikprodukts (64) zugänglich sind, in Bezug zueinander beweglich montiert sind, wobei der Deckel (14) konfiguriert ist, um mindestens Anzeigemittel (56) aufzunehmen, die Basis (12) mindestens eine Aufnahme (20) umfasst, die dazu bestimmt ist, die Tragemittel (62) zu umfassen, und wobei das Gehäuse (10) eine Datenverarbeitungsvorrichtung (70) vom kontaktlosen Typ umfasst, die mindestens geeignet ist, ein oder mehrere Daten zu lesen, die in mindestens einem Datenträger (68) enthalten sind, der fest mit den Tragemitteln (62) verbunden ist, wenn die Tragemittel (62) in der mindestens einen Aufnahme (20) montiert sind, wobei das Gehäuse **dadurch gekennzeichnet ist, dass** die Datenverarbeitungsvorrichtung (70) mindestens einen ersten Teil (72), der in der Basis (12) angeordnet ist, und einen zweiten Teil (74), der im Deckel (14) angeordnet ist, umfasst, wobei der erste und zweite Teil (72, 74) durch mindestens ein Band (76) elektrisch verbunden sind.

2. Gehäuse nach Anspruch 1, **dadurch gekennzeichnet, dass** die Tragemittel (62), die den mindestens einen Datenträger (68) umfassen, abnehmbar sind.

3. Gehäuse nach Anspruch 2, **dadurch gekennzeichnet, dass** das Gehäuse (10) Entnahmehilfsmittel (78) zum Erleichtern der Herausnahme der austauschbaren Tragemittel (62) aus der Aufnahme (20) umfasst.

4. Gehäuse nach einem der vorstehenden Ansprüche, wobei Gelenkmittel (40) zwischen dem Deckel (14) und der Basis (12) angeordnet sind, um ein Scharnier zu bilden, um diese zwischen der geschlossenen und offenen Position bewegen zu können, **dadurch gekennzeichnet, dass** die Gelenkmittel (40) konfiguriert sind, um einen Durchgang (44) aufzuweisen, der für das Band (76), das den ersten Teil (72) und den zweiten Teil (74) der Datenverarbeitungsvorrichtung (70) verbindet, bestimmt ist.

5. Gehäuse nach einem der vorstehenden Ansprüche, **dadurch gekennzeichnet, dass** der erste Teil (72) der Datenverarbeitungsvorrichtung (70) geeignet ist, mit dem mindestens einen Datenträger (68), den die Tragemittel (62) umfassen, zu kommunizieren, und der zweite Teil (74) der Datenverarbeitungsvorrichtung (70) geeignet ist, mit mindestens den Anzeigemitteln (56) zu kommunizieren.

6. Gehäuse nach einem der vorstehenden Ansprüche, **dadurch gekennzeichnet, dass** der mindestens eine Datenträger (68) ein Etikett vom NFC-Typ ist.

7. Gehäuse nach einem der vorstehenden Ansprüche, **dadurch gekennzeichnet, dass** das Gehäuse (10) Anzeigemittel (56) umfasst, die ständig fest mit dem Deckel (14) verbunden sind oder in Bezug auf den Deckel (14) abnehmbar sind.

8. Gehäuse nach Anspruch 7, **dadurch gekennzeichnet, dass** die Anzeigemittel (56) mindestens einen Bildschirm (56) umfassen, der einer elektronischen Einrichtung (60), insbesondere einem Mobiltelefon, angehört.

## Claims

1. Box (10) for cosmetic product comprising at least one base (12) and one lid (14) that are movably mounted in relation to each other between at least one closed position and one open position of the box in which the means (62) of support of at least one cosmetic product (64) are accessible, the lid (14) being configured to receive at least display means (56), the base (12) comprising at least one compartment (20) intended to contain said means (62) of support and the box (10) comprising a data processing device (70), of a contactless type, that is at least capable of reading one or more data contained in at least one data medium (68) connected to said means (62) of support when said means (62) of support are mounted in said at least one compartment (20), said box being **characterised in that** the data processing device (70) comprises at least one first part (72) that is fitted in the base (12), and one second part (74) that is fitted in the lid (14), said first and second parts (72, 74) being electrically connected by at least one flat cable (76).

2. Box according to Claim 1, **characterised in that** the said means (62) of support comprising the said at least one data medium (68) are movable.

3. Box according to Claim 2, **characterised in that** the box (10) comprises extraction assistance means (78) in order to facilitate the removal of said interchangeable means (62) of support from the compartment (20).

4. Box according to one of the preceding claims, in which means (40) of articulation are positioned between the lid (14) and the base (12) to form a hinge in order to be able to move them between said closed and open positions, **characterised in that** the means (40) of articulation are configured to present a passage (44) intended for said flat cable (76) connecting the first part (72) and the second part (74) of the data processing device (70).

5. Box according to one of the preceding claims, **characterised in that** the first part (72) of the data processing device (70) is capable of communicating with said at least one data medium (68) that comprises the means (62) of support, and the second part (74) of the data processing device (70) is capable of communicating with at least the display means (56) .

6. Box according to any of the preceding claims, **characterised in that** the said data medium (68) is an NFC-type tag.

7. Box according to any of the preceding claims, **characterised in that** the box (10) comprises display means (56) that are permanently attached to the lid (14) or movable in relation to said lid (14).

8. Box according to Claim 7, **characterised in that** the display means (56) comprise at least one screen (56) being a part of an electronic device (60), in particular, a mobile phone.
